# EUROPEAN PATENT SPECIFICATION

(11) **EP 2 408 613 B1**
(45) Date of publication and mention of the grant of the patent: **19.03.2014**
(21) Application number: 10709239.7
(22) Date of filing: 19.03.2010
(51) Int. Cl.: B29D 30/54, B26D 1/00, B29B 17/02, B29D 30/52, B29D 30/58, B23D 71/02, B29D 30/30

(54) **TYRE PRODUCTION METHOD AND SYSTEM**
VERFAHREN UND SYSTEM ZUR REIFENHERSTELLUNG
PROCÉDÉ ET SYSTÈME POUR LA PRODUCTION DE PNEUS

(30) Priority: 20.03.2009 EP 09155776
(43) Date of publication of application: 25.01.2012
(73) Proprietor: Bridgestone Corporation, Chuo-ku Tokyo 104-8340 (JP)
(72) Inventor: BASILE, Alessandro, I-00040 Pomezia (IT); COTRONI, Stefano, I-00126 Roma (IT); LELIO, Luca, 00135 Roma (IT)
(74) Representative: Maccagnan, Matteo
(86) International application number: PCT/EP2010/053651
(87) International publication number: WO 2010/106185

(56) References cited:
- EP-A- 0 654 658
- EP-A1- 1 500 527
- EP-A2- 1 260 351
- WO-A1-2008/066527
- DE-A1- 4 436 200
- DE-A1- 19 642 283
- DE-B- 1 160 607
- DE-B- 1 228 525
- DE-C1- 19 837 817
- DE-U1- 9 419 066
- GB-A- 2 435 231
- US-A- 3 879 825
- US-A- 4 230 511
- US-A- 5 478 426
- US-A1- 2005 194 077

## Description

### TECHNICAL FIELD

The present invention relates to a tyre production method and system.

The present invention may be used to advantage in producing truck tyres, to which the following description refers purely by way of example.

### BACKGROUND ART

Worn truck tyres are normally retreaded, i.e. the worn tread is removed and replaced with a new one. Retreading a truck tyre comprises removing the worn tread from the tyre to expose the tyre casing, and applying a new pre-cured tread (PCT) strip to the casing. To apply the new PCT strip to the casing, a green-rubber intermediate strip or cushion and a PCT strip are wound about the casing; and the casing is cured further in an autoclave, so the bonding action of the cushion grips the tread firmly to the casing.

Examples of tyre retreading systems are to be found in Patent US6368439B1 and Patent Application US2005194077A1. In particular, US2005194077A1 discloses a tyre retreading process comprising the steps of: selecting which worn tires fit for retreading; removing the treads of the worn tyres; mechanically buffing the tyre surfaces to the correct size, shape and texture; cementing the casings with a rubber compound; preparing new treads to fit the casings; mechanically buffing the new treads using buffing means; attaching the buffed treads to the casings using tyre-building means; and placing the retreaded tyres in a curing chamber.

Because of the large number of used tyres with damaged casings, truck tyre retreaders are faced with a shortage of retreadable casings, and are often unable to complete retreading orders. Moreover, in some markets, demand for retreaded tyres exceeds the supply of retreadable tyres (i.e. not too worn or damaged), thus resulting in lost income, due to failure to meet demand. To solve the shortage of retreadable casings, it has been proposed to use a certain number of new casings, which are cured without the tread and "retreaded" later by applying a new PCT strip.

Because the new casings and PCT strips are cured before "retreading", the casing and strip surfaces that were in contact with the curing mold walls during the curing process are left with a film of release agent (normally a silicone solution) that is sprayed onto the inside of the curing mold to facilitate the demolding (i.e. removing the cured piece easily from the mold). The release agent obviously serves to prevent, or at least partly prevent, the rubber from sticking to the curing mold walls during the curing process, and must therefore be removed from the new casing and/or PCT strip surfaces which eventually adhere to the cushion during the "retreading" process. In other words, prior to "retreading", the lateral surface of the new casing and/or the inner surface of the PCT strip must be cleaned to remove the release agent film.

This is currently done by mechanical buffing, normally using wire brushes, which serves both to eliminate the release agent and to improve grip by roughening the surface and so increasing its specific surface area.

Mechanical wire brush buffing, however, has various drawbacks. First and foremost, it mechanically removes small particles of rubber that form rubber dust, which must be removed using special extractors to avoid contaminating the workplace and fouling both the tyre and machinery.

Moreover, by its very nature, mechanical buffing does not permit accurate, constant adjustment of the amount of rubber removed, or even very uniform rubber removal, with the result that, very often, either some of the release agent is left on, or holes are created. For the same reason, mechanical buffing fails to provide for an even casing or PCT strip, thus resulting in humps or dips in the retreaded tyre, which result in annoying vertical vibrations as the tyre rolls along. The unevenness of mechanical brush buffing is particularly apparent when the lateral surface of the new casing and/or the inner surface of the PCT strip, as opposed to being flat, have longitudinal grooves, which are formed by appropriately shaping the curing mold, and serve to improve grip of the new casing or PCT strip to the cushion, and so enhance performance of the retreaded tyre (this is achieved both by increasing the specific contact area, and by producing "mutual penetration" of the casing and PCT strip, with the cushion in between, to form a mechanical joint.

When mechanical wire brush buffing, pieces of wire may work loose from the brushes and become embedded in the lateral surface of the casing or the inner surface of the PCT strip, thus locally impairing grip of the PCT strip to the casing, and reducing performance of the retreaded tyre.

Mechanical wire brush buffing produces a rough surface with an uneven, purely random score pattern, as opposed to a predetermined desired pattern.

Finally, the wire brushes are subject to severe wear and must be changed frequently, thus resulting in frequent maintenance holdups of the retreading system.

US2005194077A1 discloses a process for retreading worn tires as recited in the preamble of the independent claims; the said process comprises the steps of: selecting the worn tires which are fit to be retreaded; removing the treads of the worn tires; buffing the surface of the tires to the correct size shape and texture; cementing the casing using a rubber, compound; preparing new treads which suit the dimension of each casing; buffing the new treads using a buffing means; attaching the buffed treads onto the casing using a tire builder means; and placing the retread tires in a curing chamber.

GB2435231A discloses a removing device for removing rubber material from vehicle tyres in a tyre recycling process: removing rubber from used tyres allows them to be stored far more efficiently at garages and tyre bays because once the rubber (which can be sold for reuse) has been removed, the remaining tyre casing can simply be removed from the wheel and crushed. Most garages or tyre bays currently stack used tyres one on top of another, however the majority of the volume occupied by these stacks of tyres is empty space; by removing the rubber, and crushing the casings, garages can store far more used tyres in a much smaller space. The removing device of GB2435231A includes a supporting device for supporting a used tyre, and cutting means of any type (even a suitable laser device) which cut the rubber from the tyre.

EP0654658A2 discloses an eccentricity correction procedure for tyres; an especially preferred variation of the inventive method is provided by using a laser beam designed for removal of bead material.

DE19642283A1 discloses an advanced method of cutting tyre tread into green blank; the novel method cuts vehicular tyre treads into a smooth green tyre workpiece using the laser beam of a computer-controlled machine.

US5978426A1 discloses a method for ablating selected surfaces of a tire positioned beneath a laser system such that a laser beam is cast upon the tire sidewall. A microprocessor controls the directing of the laser beam and the position of the tire with respect thereto such that various informational and/or decorative designs and configurations may be ablated into the surface impinged by the laser beam.

### DISCLOSURE OF THE INVENTION

It is an object of the present invention to provide a tyre production method and system designed to eliminate the above drawbacks, and which in particular are cheap and easy to implement.

According to the present invention, there are provided a tyre production method and system, as claimed in the accompanying Claims.

### BRIEF DESCRIPTION OF THE DRAWINGS

A non-limiting embodiment of the present invention will be described by way of example with reference to the accompanying drawings, in which:
Figure 1 shows a schematic of a tyre production system in accordance with the present invention;
Figure 2 shows a casing of a worn truck tyre;
Figure 3 shows a new casing;
Figure 4 shows a schematic view in perspective, with parts removed for clarity, of a building machine of the Figure 1 production system;
Figure 5 shows a schematic front view, with parts removed for clarity, of a first buffing device of the Figure 1 production system;
Figure 6 shows a schematic front view, with parts removed for clarity, of a second buffing device of the Figure 1 production system.

### PREFERRED EMBODIMENTS OF THE INVENTION

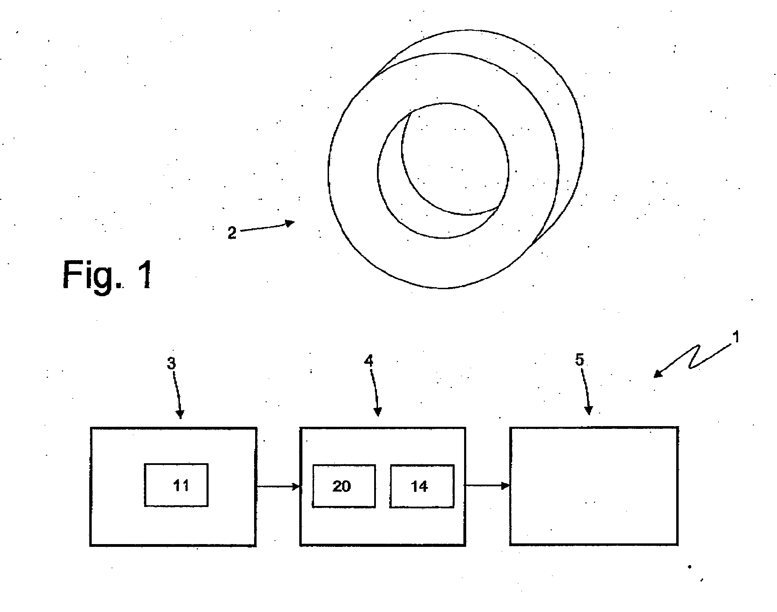

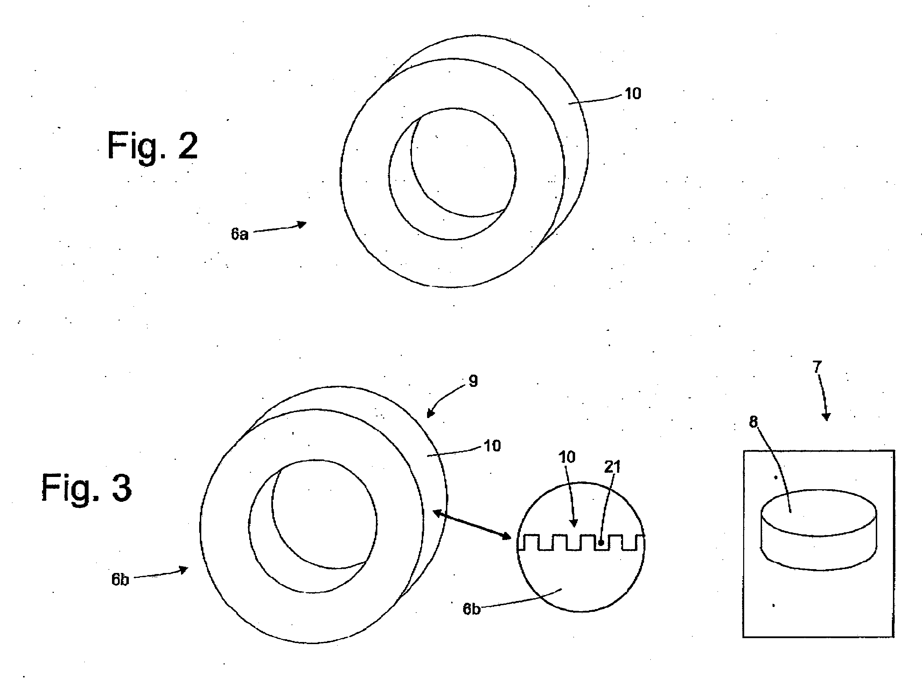

Number 1 in Figure 1 indicates as a whole a production system for retreading a worn truck tyre 2 (shown in Figure 2), and which comprises a preparation station 3, a winding station 4, and a curing station 5.

At preparation station 3, the worn tread (not shown) is removed mechanically from tyre 2, by cutters or similar, to expose the old casing 6a (shown in Figure 2) of tyre 2, i.e. what is left of tyre 2 when the tread is removed. If the old casing 6a (Figure 2) of worn tyre 2 is too worn (or damaged), a new casing 6b (Figure 3) is substituted for it. That is, a new casing 6b is produced at a building station 7 in the same way as for a normal tyre (and therefore also cured in a corresponding curing mold 8) except that it has no tread. (In other words, the new casing 6b substantially corresponds to a tyre with no tread).

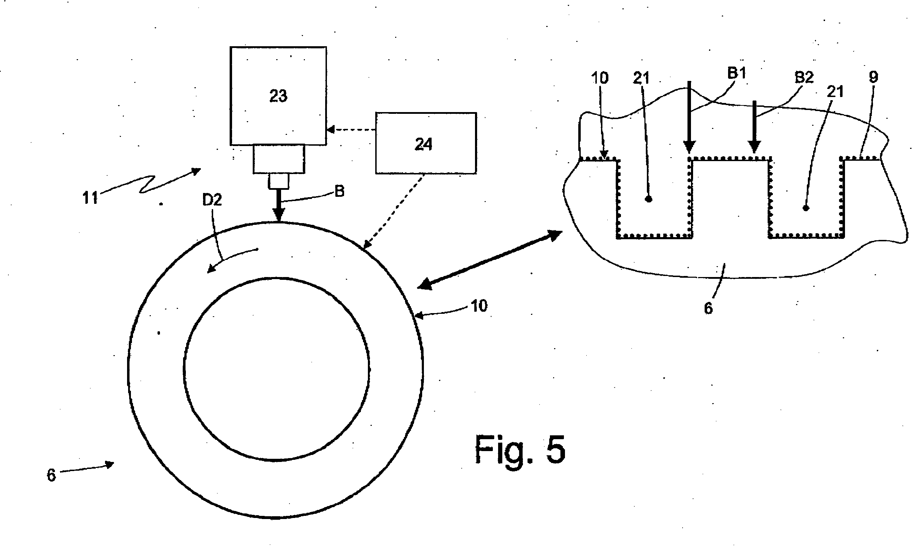

It is important to note that the new casing 6b is cured prior to "retreading", so the surfaces of the new casing that were in contact with the walls of curing mold 8 during the curing process are left with a film of release agent 9 (normally a silicone solution and shown schematically in Figure 5) that is sprayed onto the inside of curing mold 8 to remove the cured piece easily from the mold. Release agent 9 obviously serves to prevent, or at least partly prevent, the rubber from sticking to the curing mold walls during the curing process, and must therefore be removed from the lateral surface 10 of new casing 6b, which must adhere to other component parts during the "retreading" process. In other words, prior to "retreading", lateral surface 10 of new casing 6b must be cleaned to remove the film of release agent 9.

At preparation station 3, the lateral surface 10 of old casing 6a is buffed to remove all traces of the old tread (without damaging the belts underneath) and increase the specific surface area and hence grip; and the lateral surface 10 of new casing 6b is also buffed to substantially remove release agent 9 and any other extraneous substances (dust, dirt and similar) from lateral surface 10, and also to improve grip by roughening lateral surface 10 and so increasing its specific surface area.

To buff lateral surface 10 of old casing 6a or new casing 6b, preparation station 3 comprises a buffing device 11 described in detail below.

At preparation station 3, the buffed lateral surface 10 of old casing 6a is then skived by hand to remove any preexisting local damage, and, finally, is filled by hand to fill any holes in lateral surface 10 of old casing 6a with green rubber. Lateral surface 10 of new casing 6b obviously has no local damage, so does not need skiving or filling with green rubber.

The chosen casing 6 (i.e. old casing 6a or new casing 6b) is then transferred from preparation station 3 to winding station 4 where a green-rubber intermediate strip or cushion 12 and a pre-cured tread (PCT) strip 13 are wound about casing 6.

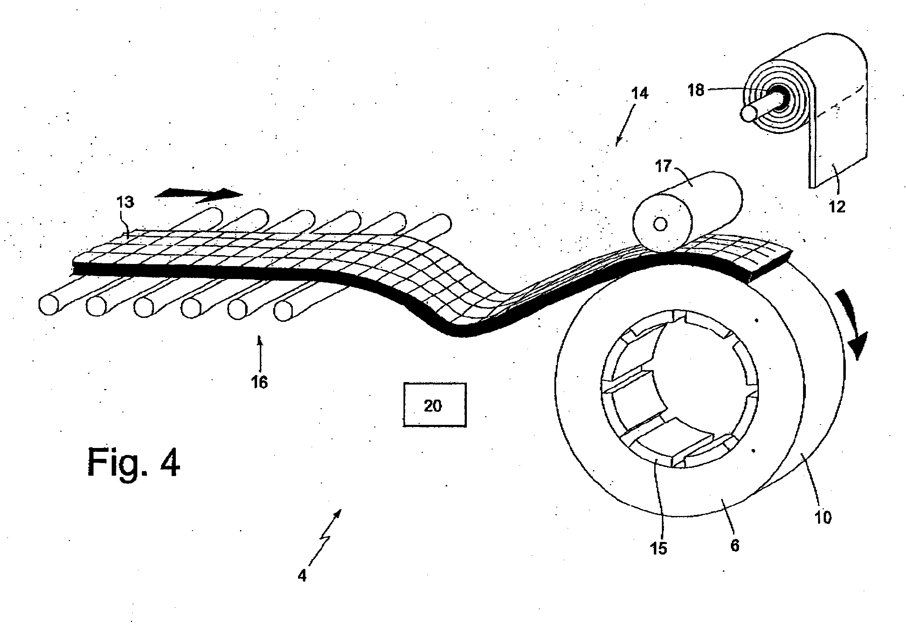

As shown in Figure 4, winding station 4 comprises a building machine 14, in turn comprising a rotary drum 15 supporting casing 6 of tyre 2; a feed conveyor 16 for feeding PCT strip 13 to rotary drum 15; a pressure roller 17 positioned contacting PCT strip 13 between drum 15 and feed conveyor 16; and an actuating device (not shown) for pushing pressure roller 17 against PCT strip 13 with adjustable force. Building machine 14 may also comprise a support 18 for supporting in rotary manner a roll of green-rubber cushion 12, which is wound manually about casing 6. In other words, feed conveyor 16 and support 18 define winding means for winding green-rubber cushion 12 about casing 6, and winding PCT strip 13 about casing 6 and on top of green-rubber cushion 12.

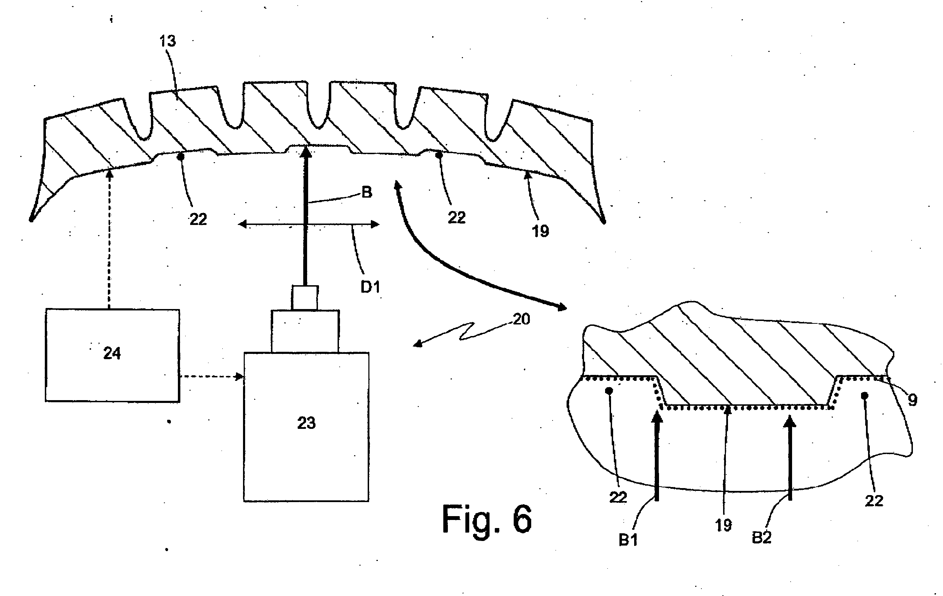

PCT strip 13 is cured in a curing mold (not shown) prior to "retreading", so the surfaces of the strip that were in contact with the curing mold walls during the curing process are left with a film of release agent 9 (normally a silicone solution and shown in Figure 6) that is sprayed onto the inside of the curing mold to remove the cured PCT strip 13 easily from the mold. Release agent 9 obviously serves to prevent, or at least partly prevent, the rubber from sticking to the curing mold walls during the curing process, and must therefore be removed from the inner surface 19 of PCT strip 13, which must adhere to cushion 12 during the "retreading" process. In other words, prior to "retreading", inner surface 19 of PCT strip 13 must be cleaned to remove the film of release agent 9.

Winding station 4 also comprises a buffing device 20, which is located upstream from feed conveyor 16, downstream from feed conveyor 16 (as shown in Figure 4), or inside feed conveyor 16, and which serves to buff inner surface 19 of PCT strip 13, substantially to remove release agent 9 and any other extraneous substances (dust, dirt and similar) from inner surface 19, and also to improve grip by roughening inner surface 19 and so increasing its specific surface area.

In a different embodiment not shown but no less important, as opposed to forming part of winding station 4, buffing device 20 for buffing inner surface 19 of PCT strip 13 is located at a work station where PCT strip 13 is formed (and which may even be completely separate and independent of production system 1); in which case, inner surface 19 of PCT strip 13 is buffed simultaneously with the manufacture of PCT strip 13, and may therefore be buffed days or weeks before winding PCT strip 13 about casing 6.

In actual use, at winding station 4, casing 6 of tyre 2 is mounted on drum 15, which is then rotated to wind green-rubber cushion 12 and PCT strip 13 about casing 6.

In a preferred embodiment, building machine 14 is operated to wind green-rubber cushion 12 manually about casing 6, independently of PCT strip 13, and then to wind PCT strip 13 separately about casing 6 and on top of the previously wound green-rubber cushion 12. In which case, buffing device 20 buffs inner surface 19 of PCT strip 13 before PCT strip 13 is wound about casing 6 and on top of the previously wound green-rubber cushion 12.

In an alternative, lesser used embodiment, green-rubber cushion 12 is superimposed on PCT strip 13 by means of two known mutually cooperating pressure rollers (not shown) off building machine 14, and green-rubber cushion 12 and PCT strip 13 are then wound together about casing 6 using building machine 14. In which case, buffing device 20 buffs inner surface 19 of PCT strip 13 before green-rubber cushion 12 is coupled to PCT strip 13.

Winding green-rubber cushion 12 and PCT strip 13 about casing 6 forms a retreaded tyre 2, which must be cured for use. So, after winding on green-rubber cushion 12 and PCT strip 13, the retreaded tyre 2 is transferred to curing station 5 (shown schematically in Figure 1) where the retreaded tyre 2 undergoes a curing process. This is a cold curing process, in which the retreaded tyre 2 is cured for a short time in an autoclave, in that only the green-rubber cushion 12 need be cured to ensure firm grip of PCT strip 13 to casing 6 of tyre 2 by virtue of the bonding action of cushion 12.

In a preferred embodiment shown in Figures 3 and 5, curing mold 8 is designed to mold a particular pattern onto lateral surface 10 of new casing 6b, to promote subsequent grip of PCT strip 13 (again with cushion 12 in between). The pattern molded onto lateral surface 10 of new casing 6b comprises a number of annular grooves 21 (i.e. perpendicular to the central axis of new casing 6b) and/or transverse grooves 21 (i.e. parallel to the central axis of new casing 6b). In a preferred embodiment, grooves 21 are only annular. For maximum grip of PCT strip 13, grooves 21 are 1 to 3 mm (normally about 2 mm) deep, and have a roughly square cross section (i.e. grooves 21 are as deep as they are wide). Grooves 21 serve to improve grip of PCT strip 13 to casing 6 (with cushion 12 in between); and this is achieved both by increasing the specific surface area of lateral surface 10 of new casing 6b (and therefore the contact area where the bonds between new casing 6b and PCT strip 13 are formed with cushion 12 in between), and by producing "mutual penetration" of new casing 6b and PCT strip 13, with cushion 12 in between, to form a mechanical joint.

In a preferred embodiment shown in Figure 6, as for new casing 6b, the curing mold of PCT strip 13 is designed to mold a particular pattern onto inner surface 19 of PCT strip 13, to promote grip of new casing 6b (again with cushion 12 in between). The pattern molded onto inner surface 19 of PCT strip 13 comprises a number of longitudinal and/or transverse grooves 22. In a preferred embodiment, grooves 22 are only longitudinal, and are of considerable depth (at least 0.5 mm and preferably about 0.8 mm, as compared with a standard depth of about 0.2 mm); tests surprisingly show that a substantial increase in the depth of longitudinal grooves 22 (to over 0.5 mm) provides for greatly improving grip of PCT strip 13 to green-rubber cushion 12 and so improving performance of retreaded tyre 2. Grooves 22 serve to improve grip of PCT strip 13 to new casing 6b (with cushion 12 in between); and this is achieved both by increasing the specific surface area of inner surface 19 of PCT strip 13 (and therefore the contact area where the bonds between new casing 6b and PCT strip 13 are formed with cushion 12 in between), and by producing "mutual penetration" of new casing 6b and PCT strip 13, with cushion 12 in between, to form a mechanical joint.

As shown in Figures 5 and 6, each buffing device 11, 20 comprises an emitter 23 for emitting a laser beam B powerful enough to sublimate rubber.

Each buffing device 11, 20 also comprises an electronically controlled deflecting device 24 connected to emitter 23 to change the emission direction of laser beam B, and which typically only changes the emission direction of laser beam B in a deflection direction D1 (Figure 6) perpendicular to the longitudinal travelling direction D2 (Figure 5) of lateral surface 10 of casing 6 or inner surface 19 of PCT strip 13. The whole of lateral surface 10 of casing 6 or inner surface 19 of PCT strip 13 is therefore swept by the laser beam using both the deflection of laser beam B in deflection direction D1, and the movement of lateral surface 10 of casing 6 and inner surface 19 of PCT strip 13 in travelling direction D2.

To sublimate a given mass of rubber (i.e. convert it directly from a solid to a gaseous state), it must be subjected to a given constant amount of energy depending on the latent sublimation heat of the rubber. The amount of energy supplied to a given point on lateral surface 10 of casing 6 or inner surface 19 of PCT strip 13 can be regulated by simply adjusting (increasing or reducing) the length of time the point is exposed to laser beam B and/or by adjusting the power of laser beam B. Therefore, by adjusting the exposure time to laser beam B from one point to another and/or adjusting the power of laser beam B, the amount of rubber sublimated (i.e. the etching depth of laser beam B) can be adjusted accurately from one point to another.

In actual use, casing 6 is rotated or PCT strip 13 fed past respective emitter 23 to allow laser beam B from emitter 23 to sublimate the rubber surface layer (together with release agent 9 and any other extraneous substances) on lateral surface 10 of casing 6 and inner surface 19 of PCT strip 13. This process of removal by sublimating the rubber surface layer provides for both even removal, to obtain a smooth finish surface, as well as differential removal, to obtain an uneven finish surface with a predetermined pattern, which may be either two-dimensional (i.e. with grooves of constant depth) or three-dimensional (i.e. with grooves of varying depth).

When grooves 21 in lateral surface 10 of casing 6 and/or grooves 22 in inner surface 19 of PCT strip 13 are preformed (i.e. when curing casing 6 and/or PCT strip 13, by appropriately shaping the curing mold), laser beam B merely serves to clean lateral surface 10 of casing 6 and inner surface 19 of PCT strip 13. In which case, emitter 23 of buffing device 11 and/or buffing device 20 may be equipped with a low-power, e.g. excimer, laser with a low rubber sublimation rate, to simply remove a thin film of rubber (of a few microns or few tens of microns).

As shown in the Figure 5 and 6 enlargements, laser beams B are perpendicular to lateral surface 10 of casing 6 and inner surface 19 of PCT strip 13, so laser beams B1 have to remove a thin layer of release agent 9 from the "horizontal" portions of lateral surface 10 and inner surface 19 (i.e. from the ridge and bottom of grooves 21 and 22), whereas laser beams B2 have to remove a thick layer of release agent 9 from the "vertical" portions of lateral surface 10 and inner surface 19 (i.e. from the slopes of grooves 21 and 22). To remove release agent 9 uniformly, laser beams B therefore supply more energy to the slope area of grooves 21 and 22, and less energy to the ridge and bottom area of grooves 21 and 22.

However, even supplying different amounts of energy to the slopes, ridges and bottom of grooves 21 and 22, removal of release agent 9 is never perfect, particularly on account of the very small horizontal extension and uncertain location, due to manufacturing tolerances, of the slopes of grooves 21 and 22 (casing 6 and PCT strip 13 are made of rubber, which does not allow very precise location of grooves 21 and 22). To eliminate this drawback, it has been proposed to form grooves 21 and/or 22, not when curing casing 6 and PCT strip 13, but by means of laser beams B during the buffing process. In other words, after curing, lateral surface 10 of casing 6 and/or inner surface 19 of PCT strip 13 are smooth, and grooves 21 and/or 22 are "etched" afterwards by laser beams B during the buffing process. Alternatively, a halfway solution may be adopted, in which grooves 21 and/or 22 are formed partly during curing, and completed later during the buffing process, by "etching" by laser beams B. In this way, it is possible to ensure release agent 9 is fully removed evenly from lateral surface 10 of casing 6 and/or inner surface 19 of PCT strip 13.

It is important to note that the pattern etched on lateral surface 10 of casing 6 and/or inner surface 19 of PCT strip 13 can be altered rapidly, if necessary from one casing 6 to another and/or from one PCT strip 13 to another, by simply software altering electronic control of deflecting devices 24.

Obviously, as opposed to a low-power, e.g. excimer, laser with a low rubber sublimation rate, "etching" grooves 21 and/or 22 calls for a high-power CO₂ laser with a high rubber sublimation rate, on account of the thick layer of rubber (about one or more millimetres) to be removed from lateral surface 10 of casing 6 and/or inner surface 20 of PCT strip 13.

Using a rubber-removing laser beam B, the rubber (and obviously release agent 9 and any other extraneous substances), as opposed to being removed mechanically, is sublimated (i.e. passes directly from the solid to the gaseous state), so buffing devices 11, 20 described produce no rubber dust, but only vapour and fumes, which obviously tend to rise and can be aspirated completely and easily by extractors (unlike rubber dust which tends to be expelled in all directions, settles by force of gravity, and is much more difficult to extract). What is more, the vapour and fumes produced by buffing devices 11, 20 in no way foul casing 6 of tyre 2, PCT strip 13, or the machinery.

Not being subject to wear or material castoff during use, buffing devices 11, 20 in no way contaminate casing 6 of tyre 2 or PCT strip 13, and need no maintenance (unless at extremely long intervals that have no real negative impact on the output of production system 1).

Tests show that buffing devices 11, 20 described provide for reducing buffing time and so increasing the output of production system 1.

In the embodiment described above, both buffing devices 11, 20 employ a rubber-removing laser beam B. In other variations not shown, only one of buffing devices 11, 20 employs a rubber-removing laser beam B, and the other is a traditional wire brush type.

## Claims

1. A method of producing a tyre (2); the method comprising the steps of:
buffing a lateral surface (10) of a casing (6) of the tyre (2);
buffing an inner surface (19) of a tread strip (13);
winding a green-rubber cushion (12) and the tread strip (13) about the lateral surface (10) of the casing (6) to assemble the tyre (2); and
curing the tyre (2);
the method being **characterized in that** the step of buffing the inner surface (19) of the tread strip (13) comprises the further steps of:
determining a desired etching pattern comprising a number of grooves (22) to be formed on the inner surface (19) of the tread strip (13);
directing a laser beam (B) onto the inner surface (19) of the tread strip (13);
producing a relative movement between the laser beam (B) and the inner surface (19) of the tread strip (13), so the laser beam (B) sweeps over the inner surface (19); and
forming the etching pattern on the inner surface (19) of the tread strip (13) by etching the inner surface (19) by means of the laser beam (B) which sublimates part of the rubber.

2. A method as claimed in Claim 1, wherein the etching pattern on the inner surface (19) of the tread strip (13) comprises a number of parallel longitudinal grooves (22) of at least 0.5 mm in depth.

3. A method as claimed in claim 1 or 2, wherein the step of producing a relative movement between the laser beam (B) and the inner surface (19) of the tread strip (13) comprises the further steps of:
varying the emission direction of the laser beam (B) solely in a deflection direction (D1); and
moving the inner surface (19) of the tread strip (13) in a longitudinal travelling direction (D2) perpendicular to the deflection direction (D1).

4. A method as claimed in any Claim 1 to 3, and comprising the further step of varying the energy supplied to a given point on the inner surface (19) of the tread strip (13) by varying the length of time the point is exposed to the laser beam (B) and/or by varying the power of the laser beam (B), so as to vary the amount of rubber sublimated at the point.

5. A system (1) for producing a tyre (2); the system comprising:
a first buffing device (11) for buffing a lateral surface (10) of a casing (6) of the tyre (2) ;
a second buffing device (20) for buffing an inner surface (19) of a tread strip (13);
a winding station (4) for winding a green-rubber cushion (12) and the tread strip (13) about the lateral surface (10) of the casing (6) to assemble the tyre (2); and
a curing station (5) for curing the tyre (2);
the system (1) being **characterized in that** the second buffing device (20) comprises:
an emitter (23) for directing a laser beam (B) onto the inner surface (19) of the tread strip (13); and
displacing means (24) for producing a relative movement between the laser beam (B) and the inner surface (19) of the tread strip (13), so the laser beam (B) sweeps over the inner surface (19);
wherein the laser beam (B) etches the inner surface (19) of the tread strip (13) by sublimating part of the rubber to form a desired etching pattern comprising a number of grooves (22) on the inner surface (19).

## Patentansprüche

1. Verfahren zur Herstellung eines Reifens (2); das Verfahren die Schritte umfassend:
Polieren einer lateralen Oberfläche (10) eines Mantels (6) des Reifens (2);
Polieren einer inneren Oberfläche (19) eines Laufflächenbandes (13);
Wickeln eines Rohgummikissens (12) und des Laufflächenbandes (13) um die laterale Oberfläche (10) des Mantels (6), um den Reifen (2) zusammenzufügen; und
Vulkanisieren des Reifens (2);
wobei das Verfahren **dadurch gekennzeichnet ist, dass** der Schritt des Polierens der inneren Oberfläche (19) des Laufflächenbandes (13) die weiteren Schritte umfasst:
Bestimmen eines gewünschten Ätzmusters, das eine Anzahl von Rillen (22) umfasst, die auf der inneren Oberfläche (19) des Laufflächenbandes (13) zu bilden sind;
Richten eines Laserstrahls (B) auf die innere Oberfläche (19) des Laufflächenbandes (13);
Erzeugen einer relativen Bewegung zwischen dem Laserstrahl (B) und der inneren Oberfläche (19) des Laufflächenbandes (13), so dass der Laserstrahl (B) über die innere Oberfläche (19) entlangfährt; und
Bilden des Ätzmusters auf der inneren Oberfläche (19) des Laufflächenbandes (13) durch Ätzen der inneren Oberfläche (19) durch den Laserstrahl (B), welcher einen Teil des Gummis sublimiert.

2. Verfahren nach Anspruch 1, wobei das Ätzmuster auf der inneren Oberfläche (19) des Laufflächenbandes (13) eine Anzahl von parallelen longitudinalen Rillen (22) von mindestens 0,5 mm Tiefe umfasst.

3. Verfahren nach Anspruch 1 oder 2, wobei der Schritt des Erzeugens einer relativen Bewegung zwischen dem Laserstrahl (B) und der inneren Oberfläche (19) des Laufflächenbandes (13) die weiteren Schritte umfasst:
Variieren der Emissionsrichtung des Laserstrahls (B) ausschließlich in einer Ablenkrichtung (D1); und
Bewegen der inneren Oberfläche (19) des Laufflächenbandes (13) in einer longitudinalen Fahrtrichtung (D2), die rechtwinklig zu der Ablenkrichtung (D1) ist.

4. Verfahren nach einem der Ansprüche 1 bis 3 und den weiteren Schritt des Variierens der Energie umfassend, die an einem bestimmten Punkt auf der inneren Oberfläche (19) des Laufflächenbandes (13) bereitgestellt wird durch Variieren der Länge der Zeit, während der der Punkt dem Laserstrahl (B) ausgesetzt ist und/oder durch Variieren der Leistung des Laserstrahls (B), um so die Menge von sublimiertem Gummi an dem Punkt zu variieren.

5. Ein System (1) zum Herstellen eines Reifens (2); das System umfassend:
eine erste Poliervorrichtung (11) zum Polieren einer lateralen Oberfläche (10) eines Mantels (6) des Reifens (2);
eine zweite Poliervorrichtung (20) zum Polieren einer inneren Oberfläche (19) eines Laufflächenbandes (13);
eine Wickelstation (4) zum Wickeln eines Rohgummikissens (12) und des Laufflächenbandes (13) um die laterale Oberfläche (10) des Mantels (6), um den Reifen (2) zusammenzufügen; und
eine Vulkanisierstation (5) zum Vulkanisieren des Reifens (2);
wobei das System (1) **dadurch gekennzeichnet ist, dass** die zweite Poliervorrichtung (20) umfasst:
einen Emitter (23) zum Ausrichten eines Laserstrahls (B) auf die innere Oberfläche (19) des Laufflächenbandes (13); und
Verschiebemittel (24) zum Erzeugen einer relativen Bewegung zwischen dem Laserstrahl (B) und der inneren Oberfläche (19) des Laufflächenbandes (13), so dass der Laserstrahl (B) über der inneren Oberfläche (19) entlangfährt;
wobei der Laserstrahl (B) die innere Oberfläche (19) des Laufflächenbandes (13) ätzt durch Sublimieren eines Teils des Gummis, um ein gewünschtes Ätzmuster zu bilden, welches eine Anzahl von Rillen (22) auf der inneren Oberfläche (19) umfasst.

## Revendications

1. Procédé de production d'un bandage pneumatique (2) ; le procédé comprenant les étapes consistant à :
brosser une surface latérale (10) d'une carcasse (6) du pneu (2) ;
brosser une surface interne (19) d'une bande de roulement (13) ;
enrouler un coussin de caoutchouc cru (12) et la bande de roulement (13) autour de la surface latérale (10) de la carcasse (6) pour assembler le pneu (2) ; et
vulcaniser le pneu (2) ;
le procédé étant **caractérisé en ce que** l'étape de brossage de la surface interne (19) de la bande de roulement (13) comprend les étapes supplémentaires consistant à :
déterminer un motif de gravure souhaité comprenant un nombre de rainures (22) devant être formées sur la surface interne (19) de la bande de roulement (13) ;
diriger un faisceau laser (B) sur la surface interne (19) de la bande de roulement (13) ;
produire un mouvement relatif entre le faisceau laser (B) et la surface interne (19) de la bande de roulement (13), de manière que le faisceau laser (B) balaie la surface interne (19) ; et
former le motif de gravure sur la surface interne (19) de la bande de roulement (13) par gravure de la surface interne (19) au moyen du faisceau laser (B) qui sublime une partie du caoutchouc.

2. Procédé selon la revendication 1, dans lequel le motif de gravure sur la surface interne (19) de la bande de roulement (13) comprend un nombre de rainures longitudinales parallèles (22) d'au moins 0,5 mm de profondeur.

3. Procédé selon la revendication 1 ou 2, dans lequel l'étape de production d'un mouvement relatif entre le faisceau laser (B) et la surface interne (19) de la bande de roulement (13) comprend les étapes supplémentaires consistant à :
faire varier la direction d'émission du faisceau laser (B) uniquement dans une direction de déviation (D1) ; et
déplacer la surface interne (19) de la bande de roulement (13) dans une direction de déplacement longitudinale (D2) perpendiculaire à la direction de déviation (D1).

4. Procédé selon l'une quelconque des revendications 1 à 3, et comprenant l'étape supplémentaire de modification de l'énergie fournie jusqu'à un point donné sur la surface interne (19) de la bande de roulement (13) par modification de la durée pendant laquelle le point est exposé au faisceau laser (B) et/ou par modification de la puissance du faisceau laser (B), afin de modifier la quantité de caoutchouc sublimée au point.

5. Système (1) de production d'un bandage pneumatique (2) ; le système comprenant :
un premier dispositif de brossage (11) pour brosser une surface latérale (10) d'une carcasse (6) du pneu (2) ;
un second dispositif de brossage (20) pour brosser une surface interne (19) d'une bande de roulement (13) ;
une station d'enroulement (4) pour enrouler un coussin de caoutchouc cru (12) et la bande de roulement (13) autour de la surface latérale (10) de la carcasse (6) pour assembler le pneu (2) ; et
une station de vulcanisation (5) pour vulcaniser le pneu (2) ;
le système (1) étant **caractérisé en ce que** le second dispositif de brossage (20) comprend :
un émetteur (23) pour diriger un faisceau laser (B) sur la surface interne (19) de la bande de roulement (13) ; et
un moyen de déplacement (24) pour produire un mouvement relatif entre le faisceau laser (B) et la surface interne (19) de la bande de roulement (13), de manière que le faisceau laser (B) balaie la surface interne (19) ;
le faisceau laser (B) gravant la surface interne (19) de la bande de roulement (13) en sublimant une partie du caoutchouc pour former un motif de gravure souhaité comprenant un nombre de rainures (22) sur la surface interne (19).
